# FASCICULE DE BREVET EUROPEEN

(11) **EP 2 515 088 B1**
(45) Date de publication et mention de la délivrance du brevet: **19.03.2014**
(21) Numéro de dépôt: 11305477.9
(22) Date de dépôt: 21.04.2011
(51) Int. Cl.: G01F 1/075, G01F 1/06, G01F 1/08

(54) **Compteur de fluide à turbine**
Turbinenflüssigkeitszähler
Turbine flow meter

(43) Date de publication de la demande: 24.10.2012
(73) Titulaire: Itron France, 92100 Boulogne-Billancourt (FR)
(72) Inventeur: Bouzid, Tarek, 71000, Macon (FR); Roberjot, Eric, 71000, Macon (FR)
(74) Mandataire: Howson, Richard G.B.

(56) Documents cités:
- EP-A1- 2 290 330
- DE-C- 147 919
- DE-C- 155 871
- JP-A- 2 138 823

## Description

L'invention concerne un compteur de fluide, en particulier d'eau, à turbine.

Un tel compteur comporte une bâche pourvue d'une tubulure d'entrée du fluide et une tubulure de sortie du fluide destinées à être raccordées respectivement à une canalisation d'arrivée et à une canalisation d'évacuation du fluide. A l'intérieur de cette bâche est disposé un dispositif de mesure comportant la turbine superposée d'une platine et un totalisateur est monté sur la bâche, éventuellement par l'intermédiaire d'une bague vissée.

Actuellement, les tubulures d'entrée et de sortie sont symétriques par rapport à un plan central de la bâche et sont soit toutes deux inclinées comme décrit par exemple dans le document de brevet EP 0 718 602, soit toutes deux alignées comme décrit par exemple dans le document de brevet EP 0 842 398, DE 147919, DE 155871 et EP 2290330.

En tenant compte de contraintes d'encombrement, il est nécessaire en fonction de la longueur de ces tubulures de mettre au point et de régler en conséquence la métrologie du dispositif de mesure hydraulique, à savoir son diamètre, et de ces tubulures, à savoir leur diamètre. Divers types de compteurs tous différents quant à ces caractéristiques sont donc réalisés en fonction de plages d'encombrement.

L'objet de l'invention est de standardiser un tel compteur à turbine qui puisse être utilisé pour une large plage d'encombrement entre canalisations d'arrivée et d'évacuation du fluide, sans modification de la métrologie de son dispositif de mesure.

Pour ce faire, l'invention propose un compteur de fluide à turbine comprenant une bâche pourvue d'une tubulure d'entrée du fluide et une tubulure de sortie du fluide dont la face d'extrémité respective est parallèle à un plan contenant l'axe de rotation de ladite turbine dit transversal vertical et destinées à être raccordées respectivement à une canalisation d'arrivée et à une canalisation d'évacuation du fluide, ladite bâche contenant un dispositif de mesure comportant la turbine superposée d'une platine, ladite tubulure d'entrée du fluide ayant son axe longitudinal incliné par rapport audit plan transversal vertical, caractérisé en ce que ladite tubulure de sortie du fluide a son axe longitudinal perpendiculaire audit plan transversal vertical.

La distance entre la face d'entrée d'un filtre équipant ladite tubulure d'entrée du fluide et ledit plan transversal vertical est fixe et la longueur de ladite tubulure de sortie du fluide est variable.

Selon un mode de réalisation préféré, ladite tubulure de sortie du fluide est disposée du même côté d'un plan contenant l'axe de rotation de la turbine, perpendiculaire audit plan transversal vertical et dit longitudinal vertical que ladite tubulure d'entrée.

Ladite tubulure d'entrée du fluide peut avoir son axe longitudinal formant un angle compris entre 10 et 25 degrés avec ledit plan longitudinal vertical.

Avantageusement, ladite tubulure d'entrée du fluide a son axe longitudinal formant un angle de l'ordre de 18 degrés avec ledit plan longitudinal vertical.

A titre d'exemple, il peut être réalisé une tubulure de sortie de longueur variable de type télescopique.

L'invention concerne également une gamme de tels compteurs, caractérisée en ce que ladite longueur variable de ladite tubulure de sortie du fluide de chaque compteur est différente.

De préférence, la distance entre la face d'extrémité de ladite tubulure de sortie et la face d'extrémité de ladite tubulure d'entrée varie entre 80 et 190mm.

L'invention est décrite ci-après plus en détail à l'aide de figures représentant un mode de réalisation préféré de l'invention.

Les figures 1A et 1B représentent en coupe verticale et horizontale un compteur conforme à l'invention.

Les figures 2A et 2B représentent en coupe verticale et horizontale un compteur de la même gamme conforme à l'invention.

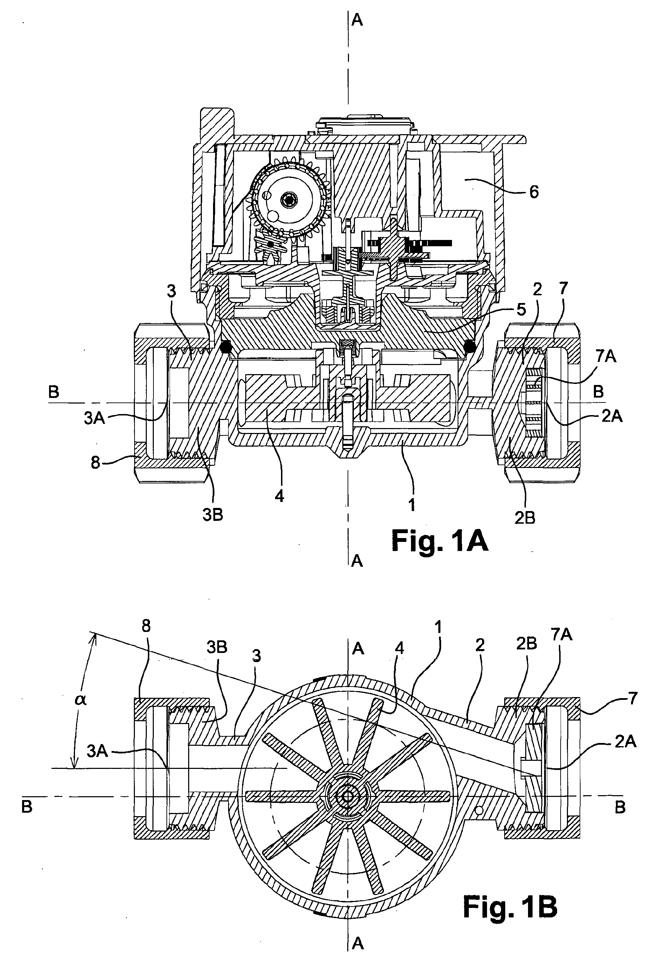

Comme représenté sur les figures 1A et 1B, conformément à l'invention, un compteur de fluide à turbine comprend une bâche 1 pourvue d'une tubulure d'entrée 2 du fluide équipée d'un filtre 7A et une tubulure de sortie 3 du fluide dont la face d'extrémité respective 2A, 3A est parallèle à un plan A-A contenant l'axe de rotation de ladite turbine 4 dit transversal vertical et destinées à être raccordées respectivement à une canalisation d'arrivée et à une canalisation d'évacuation du fluide, ladite bâche 1 contenant un dispositif de mesure comportant la turbine 4 superposée d'une platine 5. Selon l'exemple représenté, la face d'entrée du filtre 7A équipant la tubulure d'entrée 2 est également la face d'extrémité 2A de cette tubulure d'entrée. C'est en général le cas lorsque la bâche 1 est en laiton. Cependant, selon d'autres exemples de réalisation, en particulier lorsque la bâche 1 est réalisée en matière plastique composite, ces deux faces peuvent être différentes, la tubulure d'entrée 2 étant alors prolongée en amont du filtre.

Selon l'invention, la bâche peut être métallique ou en matière plastique composite.

Sur cette bâche 1 est disposé un totalisateur 6 connecté par exemple magnétiquement à l'axe de rotation de la turbine et comportant entre autre un moyen de comptage du débit ou du volume de fluide, par exemple d'eau.

Les tubulures 2, 3 portent à leur face d'extrémité une bride de raccord annulaire filetée 2B, 3B supportant un collier 7, 8 de fixation aux canalisations d'arrivée et d'évacuation.

La tubulure d'entrée 2 du fluide est droite et a son axe longitudinal incliné par rapport au plan transversal vertical A-A et la tubulure de sortie 3 du fluide est également droite et a son axe longitudinal perpendiculaire au plan transversal vertical A-A.

La tubulure de sortie 3 du fluide est disposée du même côté d'un plan (B-B) contenant l'axe de rotation de la turbine (4), perpendiculaire audit plan transversal vertical (A-A) et dit longitudinal vertical que la tubulure d'entrée 2.

Un plan central de la paroi de la tubulure de sortie 3 peut être tangentiel à ce plan B-B.

La tubulure d'entrée 2 du fluide a son axe longitudinal formant un angle α compris entre 10 et 25 degrés avec le plan longitudinal vertical B-B et de préférence de l'ordre de 18 degrés.

Grâce à l'invention, la distance entre la face d'entrée du filtre 7A équipant la tubulure d'entrée 2 du fluide et ledit plan transversal vertical A-A peut être fixe et la longueur de la tubulure de sortie 3 du fluide peut être variable, sans modification métrologique du corps de la bâche 1 et de la turbine 4.

L'invention concerne également une gamme de compteurs dont la longueur de la tubulure de sortie 3 du fluide de chaque compteur est différente.

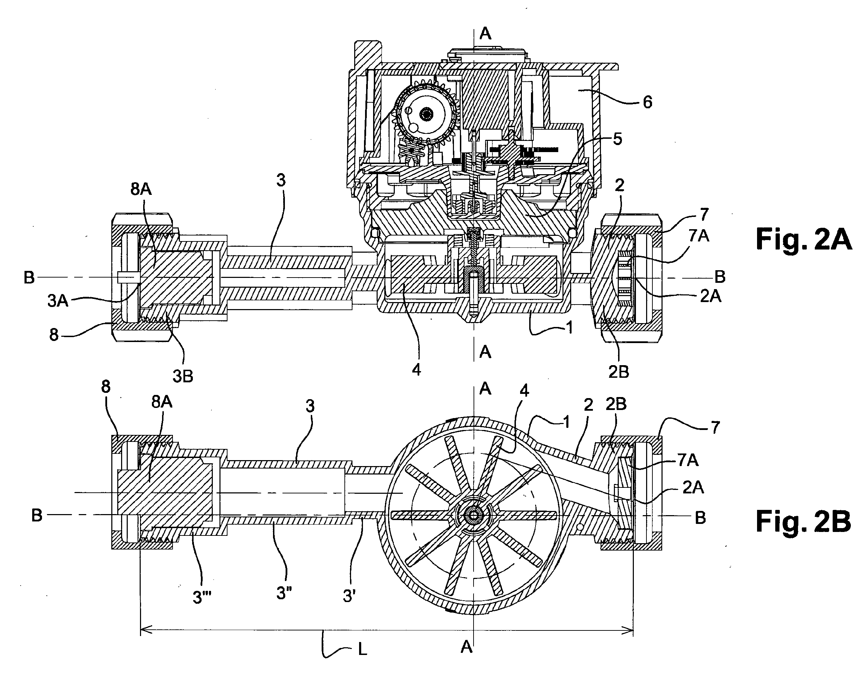

A titre d'exemple, les figures 2A et 2B représentent un compteur de la même gamme que le précédent, chaque gamme correspondant à un calibre du compteur.

La tubulure de sortie 3 comporte un premier tronçon 3' de longueur identique au compteur précédent, prolongé par deux tronçons 3", 3"' de diamètre supérieur pour venir s'adapter au diamètre de la canalisation d'évacuation. Le diamètre de la tubulure de sortie 3 peut également être constante, selon le mode de réalisation et l'adaptation à cette canalisation d'évacuation. La tubulure de sortie 3 peut comporter à son extrémité un clapet anti-retour 8A au niveau du collier de fixation 8.

De préférence, dans une gamme de compteurs, la distance L entre la face d'extrémité 3A de la tubulure de sortie 3 et la face d'extrémité 2A de la tubulure d'entrée 2 varie entre 80 et 190mm.

Pour chaque calibre de compteur, la distance entre la face d'entrée du filtre 7A équipant la tubulure d'entrée 2 et le plan transversal vertical A-A qui reste constante pour toute une gamme de compteurs est définie par simulation informatique et/ou essais.

A titre d'exemple, pour un calibre correspondant à un diamètre interne du corps de la bâche de 47mm, cette distance est de l'ordre de 40 mm et le diamètre interne de la tubulure d'entrée 2 de l'ordre de 11mm.

## Revendications

1. Compteur de fluide à turbine comprenant une bâche (1) pourvue d'une tubulure d'entrée (2) du fluide et une tubulure de sortie (3) du fluide dont la face d'extrémité respective est parallèle à un plan (A-A) contenant l'axe de rotation de ladite turbine dit transversal vertical et destinées à être raccordées respectivement à une canalisation d'arrivée et à une canalisation d'évacuation du fluide, ladite bâche (1) contenant un dispositif de mesure comportant la turbine (4) superposée d'une platine (5), ladite tubulure d'entrée (2) du fluide ayant son axe longitudinal incliné par rapport audit plan transversal vertical et ladite tubulure de sortie (3) du fluide ayant son axe longitudinal perpendiculaire audit plan transversal vertical, compteur **caractérisé en ce que** la distance entre la face d'entrée d'un filtre (7A) équipant ladite tubulure d'entrée (2) du fluide et ledit plan transversal vertical (A-A) est fixe et la longueur de ladite tubulure de sortie (3) du fluide est variable.

2. Compteur selon la revendication 1, **caractérisé en ce que** ladite tubulure de sortie (3) du fluide est disposée du même côté d'un plan (B-B) contenant l'axe de rotation de la turbine (4), perpendiculaire audit plan transversal vertical (A-A) et dit longitudinal vertical que ladite tubulure d'entrée (2).

3. Compteur selon l'une des revendications précédentes, **caractérisé en ce que** ladite tubulure d'entrée (2) du fluide a son axe longitudinal formant un angle (a) compris entre 10 et 25 degrés avec ledit plan longitudinal vertical (B-B).

4. Compteur selon la revendication précédente, **caractérisé en ce que** ladite tubulure d'entrée (2) du fluide a son axe longitudinal formant un angle (α) de l'ordre de 18 degrés avec ledit plan longitudinal vertical (B-B).

5. Gamme de compteurs selon l'une des revendications précédentes, **caractérisée en ce que** ladite longueur variable de ladite tubulure de sortie (3) du fluide de chaque compteur est différente.

6. Gamme selon la revendication précédente, **caractérisée en ce que** la distance (L) entre la face d'extrémité de ladite tubulure de sortie (3) et la face d'extrémité de ladite tubulure d'entrée (2) varie entre 80 et 190mm.

## Patentansprüche

1. Turbinenfluidzähler, umfassend einen Behälter (1), der mit einer Eingangsrohrleitung (2) für das Fluid und einer Ausgangsrohrleitung (3) für das Fluid versehen ist, deren jeweilige Endfläche parallel zu einer Ebene (A-A) ist, die die Rotationsachse der Turbine, vertikale Querachse genannt, enthält, und die dazu bestimmt sind, jeweils an einen Einlasskanal bzw. einen Auslasskanal des Fluids angeschlossen zu werden, wobei der Behälter (1) eine Messvorrichtung enthält, umfassend die Turbine (4), die über einer Platine (5) angeordnet ist, wobei die Fluideingangsrohrleitung (2) eine geneigte Längsachse in Bezug zur vertikalen Querebene und die Fluidausgangsrohrleitung (3) eine zur vertikalen Querebene senkrechte Längsachse aufweist, wobei der Zähler **dadurch gekennzeichnet ist, dass** der Abstand zwischen der Eingangsseite eines Filters (7A), mit dem die Fluideingangsrohrleitung (2) versehen ist, und der vertikalen Querebene (A-A) feststehend und die Länge der Fluidausgangsrohrleitung (3) variabel ist.

2. Zähler nach Anspruch 1, **dadurch gekennzeichnet, dass** die Fluidausgangsrohrleitung (3) auf derselben Seite einer Ebene (B-B), die die Rotationsachse der Turbine (4) enthält, senkrecht auf die vertikale Querebene (A-A), vertikale Längsebene genannt, wie die Eingangsrohrleitung (2) angeordnet ist.

3. Zähler nach einem der vorhergehenden Ansprüche, **dadurch gekennzeichnet, dass** die Fluideingangsrohrleitung (2) eine Längsachse hat, die einen Winkel (a) zwischen 10 und 25 Grad mit der vertikalen Längsebene (B-B) bildet.

4. Zähler nach dem vorhergehenden Anspruch, **dadurch gekennzeichnet, dass** die Fluideingangsrohrleitung (2) eine Längsachse hat, die einen Winkel (α) von ungefähr 18 Grad mit der vertikalen Längsebene (B-B) bildet.

5. Palette von Zählern nach einem der vorhergehenden Ansprüche, **dadurch gekennzeichnet, dass** die variable Länge der Fluidausgangsrohrleitung (3) jedes Zählers unterschiedlich ist.

6. Palette nach dem vorhergehenden Anspruch, **dadurch gekennzeichnet, dass** der Abstand (L) zwischen der Endfläche der Ausgangsrohrleitung (3) und der Endfläche der Eingangsrohrleitung (2) zwischen 80 und 190 mm variiert.

## Claims

1. Turbine fluid meter comprising a reservoir (1) provided with a fluid inlet manifold (2) and a fluid outlet manifold (3), of which the respective end face is parallel to a plane (A-A) containing the axis of rotation of said so-called vertical transverse turbine and which are intended to be connected respectively to an intake pipe and to a discharge pipe for the fluid, said reservoir (1) containing a measuring device including the turbine (4) superimposed with a plate (5), said fluid inlet manifold (2) having its longitudinal axis inclined relative to said vertical transverse plane and said fluid outlet manifold (3) having its longitudinal axis perpendicular to said vertical transverse plane, **characterised in that** the distance between the inlet face of a filter (7A) fitted to said fluid inlet manifold (2) and said vertical transverse plane (AA) is fixed and the length of said fluid outlet manifold (3) is variable.

2. Meter as claimed in Claim 1, **characterised in that** said fluid outlet manifold (3) is disposed on the same side of a plane (B-B) containing the axis of rotation of the turbine (4), which is perpendicular to said vertical transverse plane (A-A) and referred to as a vertical longitudinal axis, as said inlet manifold (2).

3. Meter as claimed in any one of the preceding claims, **characterised in that** the said fluid inlet manifold (2) has its longitudinal axis forming an corner (α) between 10 and 25° with said vertical longitudinal plane (B-B).

4. Meter as claimed in the preceding claim, **characterised in that** the said fluid inlet manifold (2) has its longitudinal axis forming an angle (α) of the order of 18° with said vertical longitudinal plane (B-B).

5. Range of meters as claimed in any one of the preceding claims, **characterised in that** said variable length of said fluid outlet manifold (3) of each meter is different.

6. Range as claimed in the preceding claim, **characterised in that** the distance (L) between the end face of said outlet manifold (3) and the end face of said inlet manifold (2) varies between 80 and 190 mm.
